# EUROPEAN PATENT SPECIFICATION

(11) **EP 2 501 024 B1**
(45) Date of publication and mention of the grant of the patent: **04.05.2016**
(21) Application number: 11158637.6
(22) Date of filing: 17.03.2011
(51) Int. Cl.: H02M 1/08

(54) **Circuit arrangement for driving a high-side semiconductor switch**
Schaltungsanordnung zum Antreiben einer spannungsseitigen Halbleiterschaltung
Circuit pour commander un commutateur semiconducteur de puissance du côté de l'alimentation

(43) Date of publication of application: 19.09.2012
(73) Proprietor: Helvar Oy Ab, 03600 Karkkila (FI)
(72) Inventor: Vihinen, Hannu, FI-03600 Karkkila (FI)
(74) Representative: Berggren Oy Ab

(56) References cited:
- EP-A1- 1 463 189
- WO-A1-2005/076100
- US-A1- 2007 291 521
- US-A1- 2008 112 192

## Description

### FIELD OF THE INVENTION

The invention relates to a circuit for driving a switch of a power converter circuit. In particular, the invention relates to a circuit for driving an electrically controllable switch of a power converter circuit arranged to supply power to light element, such as a light emitting diode (LED) or a string of LEDs, a fluorescent lamp, a high-intensity discharge (HID) lamp, etc.

### BACKGROUND OF THE INVENTION

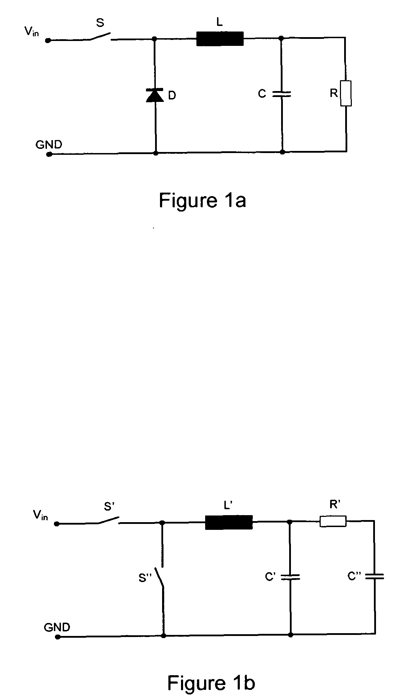

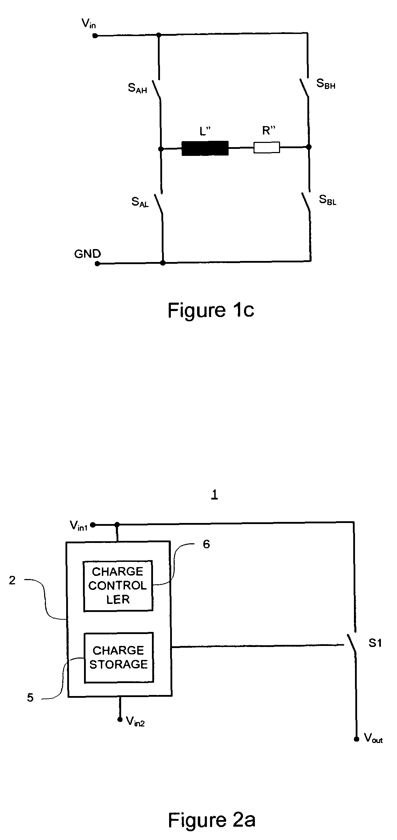

A power converter circuit may be used for example to convert direct current (DC) from one voltage level to another. An example of such a power converter circuit is a buck converter that may be used to convert an input voltage to a lower output voltage. A basic structure of a buck converter circuit is illustrated in Figure 1 a. As a brief summary of the operation, when a switch S is closed, electric current flows through the switch S and through the inductor L, whereas while the switch S is open, electric current flows through the diode D to the inductor L. Operating the switch S in a suitable manner results in a desired (average) electric current via the inductor L - and hence to the load represented by a resistor R. The switch S of the buck converter illustrated in Figure 1 a can be considered as a high side switch of the buck converter due to being connected to the voltage source Vᵢₙ in high potential (as opposed to the low potential represented by the ground potential GND).

Another example of a power converter circuit is a half-bridge, which can be used for example to provide alternating current (AC) for a fluorescent lamp. A basic structure of a half-bridge circuit is illustrated in Figure 1 b. As a brief summary of the operation, switches S' and S" are operated in such a manner that when the switch S' is closed, the switch S" is open and vice versa. When the switch S' is closed and the switch S" is open, electric current flows through the switch S' and through the inductor L' towards the load represented by the resistor R'. Conversely, when the switch S' is open and the switch S" is closed, electric current flows via the inductor L' through the switch S" toward the ground potential GND. Operating the switches S' and S" in a suitable manner results in a desired (alternating) electric current via the inductor L' - and hence to the load represented by a resistor R'. Along the lines of terminology referred to above in context of the buck converter circuit, the switch S' of the half-bridge circuit illustrated in Figure 1 b can be considered as a high side switch of the half-bridge, whereas the switch S" may be considered as a low side switch of the half-bridge circuit.

A further example of a power converter circuit is a full bridge, which can be used for example to provide AC to a HID lamp. A basic structure of a full bridge circuit is illustrated in Figure 1 c. As a brief summary of the operation, switches S_{AH}, S_{AL}, S_{BH} and S_{BL} are operated in such a way that when the switches S_{AH} and S_{BL} are closed, the switches S_{AL} and S_{BH} are open - and vice versa. When the switches S_{AH} and S_{BL} are closed, electric current flows from Vᵢₙ via the switch S_{AH}, the inductor L" the resistor R" and the switch S_{BL} towards GND, whereas when the switches S_{AL}, and S_{BH} are closed, electric current flows from Vᵢₙ via the switch S_{BH}, the resistor R", the inductor L" and the switch S_{AL} towards GND. Along the lines of terminology used with the above power converter circuit examples, the switches S_{AH} and S_{BH} can be considered as high side switches of the full bridge circuit, while the switches S_{AL} and S_{BL} may be considered as low side switches of the full bridge circuit.

Typically, a dedicated circuit is used for driving the high side switch and/or the low side switch of a power converter circuit, such as the switches S, S' and S" of a buck converter and/or a half-bridge referred to above. Such an arrangement is disclosed e.g. in the US patent application US 2007/291521 A1.

The object of the invention is to provide a circuit for driving a switch of a power converter that is affordable, having a simple structure and comprising a small number of components.

### SUMMARY OF THE INVENTION

The objects of the invention are reached by a circuit as defined by the independent claim.

According to a first aspect of the invention, a circuit for driving a switch of a power converter is provided. The circuit comprises a first input node connectable to a first potential, a second input node connectable to a first control signal, arranged to provide a control potential that is lower than the first potential, and an output node. The circuit further comprises a first electrically controllable switch as a high side switch of the power converter, the first electrically controllable switch having a first terminal coupled to the first input node and a second terminal coupled to the output node, and charging means coupled to the first input node and to the second input node, the charging means having an output coupled to a control terminal of the first electrically controllable switch. The charging means comprises a charge storage comprising a capacitor having a first terminal coupled to the second input node and a second terminal coupled to the first input node, the charge storage arranged to receive a first charge via the first input node and to supply a second charge to the output of the charging means. The charging means further comprises a charge controller arranged to control the charge storage to receive the first charge and to supply the second charge in response to the control potential applied at the second input node.

According to a second aspect of the invention, use of a circuit as described hereinbefore for driving a power converter circuit is provided.

A circuit for driving a switch of a power converter according to the invention enables an affordable but yet effective circuit design having a simple structure and comprising a small number of components. Moreover, a circuit according to the invention is able to make use of the (high) potential provided at the first input node to provide the operating power for a high side switch of the power converter in response to a control potential provided at the second input node, thereby not requiring a separate power source for the high side switch.

The exemplary embodiments of the invention presented in this patent application are not to be interpreted to pose limitations to the applicability of the appended claims. The verb "to comprise" is used in this patent application as an open limitation that does not exclude the existence of also unrecited features. The features described hereinafter are mutually freely combinable unless explicitly stated otherwise. The scope of the invention is solely defined by the appended claims.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 a illustrates an example of a basic structure of a buck converter circuit.
Figure 1 b illustrates an example of a basic structure of a half-bridge circuit
Figure 1 c illustrates an example of a basic structure of a full bridge circuit
Figure 2a illustrates a first example of a circuit according to an embodiment of the invention.
Figure 2b illustrates a second example of a circuit according to an embodiment of the invention.
Figure 2c illustrates a third example of a circuit according to an embodiment of the invention.
Figure 3 illustrates a fourth example of a circuit according to an embodiment of the invention.
Figure 4 illustrates a fifth example of a circuit according to an embodiment of the invention.
Figure 5 illustrates an example of a circuit according to an embodiment of the invention for driving a switch of a buck converter circuit.
Figure 6 illustrates a first example of a control circuit for providing a control potential for a circuit according to an embodiment of the invention.
Figure 7 illustrates an example of a circuit according to an embodiment of the invention for driving a switch of a half-bridge circuit.
Figure 8 illustrates a second example of a control circuit for providing a control potential for a circuit according to an embodiment of the invention.
Figure 9 illustrates an example of a circuit according to an embodiment of the invention for driving a switch of a full bridge circuit.
Figure 10 illustrates a sixth example of a circuit according to an embodiment of the invention.

### DETAILED DESCRIPTION

Figure 2a illustrates an example of a circuit 1 for driving a switch of a power converter circuit according to an embodiment of the invention. The circuit 1 may be used, for example, for driving a power converter circuit arranged to supply power to a suitable load. Such load may be for instance a light element, such as a light emitting diode (LED) or a string of LEDs, a fluorescent lamp, a high-intensity discharge (HID) lamp, etc.

The circuit 1 comprises a first input node Vᵢₙ₁, a second input node Vᵢₙ₂, an output node Vₒᵤₜ, a first electrically controllable switch S1, and charging means 2 for charging a control terminal of the electrically controllable switch S1. The circuit 1 may further comprise discharging means 3 for discharging the control terminal of the electrically controllable switch S1.

An electrically controllable switch, such as the electrically controllable switch S1, has a first terminal, a second terminal and a control terminal. Such a switch is said to be in an open state (or open, for simplicity) when there is no electrical contact between the first terminal of the switch and the second terminal of the switch and, consequently, the flow of electric current between the first and second terminals is not enabled. Conversely, the switch is said to be in a closed state (or closed, for simplicity) when there is an electrical contact between the first terminal and the second terminal of the switch, enabling the flow of electric current between the first terminal and the second terminal.

The control terminal of the switch is arranged to enable toggling between the open state and the closed state. As an example, electrical charge exceeding a predetermined threshold applied to the control terminal of the switch may be arranged to cause the switch to be (or to be set) in the closed state, whereas in case of electrical charge not exceeding the predetermined threshold the control terminal may be arranged to keep (or set) the switch in the open state. As another example, the effect of applying electrical charge to the control terminal may be reversed from the first example in this regard: a charge exceeding a predetermined threshold applied to the control terminal is arranged to set the switch in the open state, while charge not exceeding the threshold is arranged to keep the switch in the closed state. As a further example, the state of the switch may be arranged to depend on the relative charge or potential applied to the control terminal and to one of the first and second terminals, e.g. such that the switch is arranged to be in a closed state when charge or potential exceeding that of the control terminal is applied to the first terminal of the switch and/or when charge or potential exceeding that of the control terminal by a predetermined margin is applied to the first terminal of the switch. In addition to potential and charge controlled, also current-controlled electrically controllable switches are known.

In the following the term switch is used, for simplicity, to refer to an electrically controllable switch.

The first input node Vᵢₙ₁ is connectable to a first potential, provided by for example a first voltage source. The first voltage source may be arranged to provide a first potential, for example a supply voltage or an operating voltage the power converter circuit is arranged to convert. The first voltage source providing the first potential may be arranged to provide constant or essentially constant potential (or voltage). As another example, the first voltage source may be arranged to provide potential (or voltage) that is constant or essentially constant for a predetermined or a desired (temporal) duration, but that may be changed to another desired, constant or essentially constant, potential (or voltage) value within a predetermined voltage range. As a further example, the first voltage source may be arranged provide a potential (or voltage) that may, instead of being constant or essentially constant, be varied within a predetermined voltage range. The first voltage source may be arranged to provide a relatively high potential (or voltage), for example a voltage in the range 100 to 400 V. As a further example, a suitable potential (or voltage) outside this range may also be employed. The first voltage source may be arranged for instance to provide a voltage of 50 V or essentially 50 V.

The second input node Vᵢₙ₂ is connectable to a first control signal. The first control signal may be arranged to provide a first control potential, i.e. a first control voltage, that is lower than the first potential. The first control signal may be arranged to supply a first control potential that varies within a predetermined range defined by a first control potential value and a second control potential value. In particular, the first control signal may be arranged to supply a first control potential that may be controlled to alternate between a first control potential value and a second control potential value.

As an example, the control signal may be arranged to provide a control potential that is alternated between a first control potential value and a second control potential value such that the control signal is arranged to provide the first control potential value for a predetermined (temporal) duration t₁, after which the control signal is arranged to provide the second control potential value for a predetermined duration t₂ before being changed back to provide the first control potential value for the duration of t₁, and so on. In other words, the control signal may be arranged to provide a pulse train, wherein the pulses have amplitude (i.e. 'height') determined by the difference between the first control potential value and the second control potential value, duration (i.e. 'width') determined by t₁, and (temporal) spacing determined by t₂. The first control signal may be further arranged to provide a pulse train wherein the first control potential value, the second control potential value, t₁ and/or t₂ may be changed or varied to modify the characteristics of the pulse train for example by changing the amplitude, the duration and/or the (temporal) spacing of the pulses in response to one or more control signals provided to the entity providing the first control signal. Such a control signal may be formed for example based at least in part on electric current of the load coupled to the power converter circuit. The first control potential value may be 0 V or essentially 0 V and the second control potential value may be 12 V or essentially 12 V. The first control potential value and the second control potential value may be different from the example values used hereinbefore. In particular, the second control potential value may be any suitable potential, for example a potential in the range from 8 to 20 V and/or the first control potential value may be different from 0 V. The higher of the first and second control potential values should be selected to provide high enough charge to enable setting the switches S1 and S2 in the closed state, whereas the lower one the first and second control potential values should be selected to provide low enough charge to enable setting the switch S2 in the open state, as described in detail hereinafter.

The first input node Vᵢₙ₁ and the second input node Vᵢₙ₂ may be connected directly to the respective voltage sources, or the first input node Vᵢₙ₁ and the second input node Vᵢₙ₂ may be coupled to the respective potentials and/or voltage sources via one or more intervening components, depending on the design and usage of the circuit 1.

The output node Vₒᵤₜ is the output of the circuit 1, and the output node Vₒᵤₜ may also constitute the output of the power converter circuit arranged to be driven by the circuit 1. Hence, the output node Vₒᵤₜ may be connectable directly to a load to be powered by the power converter circuit or, alternatively, the output node Vₒᵤₜ may be suitable for coupling to a load via an intervening component. Such an intervening component may be part of the power converter circuit or it may be a component not part of the power converter circuit.

The first electrically controllable switch S1 may be arranged to operate in such a way that when a voltage (or charge) exceeding a predetermined threshold is applied to the control terminal, the switch S1 is in the closed state. On the other hand, a voltage not exceeding the predetermined threshold applied to the control terminal results in the first switch S1 being in the open state.

As another example, the first switch S1 may be arranged to operate in such a way that when the voltage (or charge) at its first terminal does not exceed the voltage (or charge) of its control terminal plus a threshold value, the first switch S1 is in the open state. Conversely, when the voltage (or charge) at the first terminal (is equal to or) exceeds that of the control terminal plus the threshold value, the first switch S1 is in the closed state. Here the threshold value can be any positive value, including zero. Consequently, the first control signal should be arranged to provide a second control potential value that results in high enough charge to set the switch S1 in the closed state when supplied to its control terminal.

The charging means 2 is arranged to enable providing electrical charge to the control terminal of the first switch S1 in order to set the first switch S1 either into the open state or to the closed state. This may involve the charging means 2 being arranged to provide a suitable charge in order to set the first switch S1 into the closed state in response to a first control potential supplied at the second input node Vᵢₙ₂ and, conversely, being arranged to discontinue providing such a charge in order to set the first switch S1 into the open state in response to a second control potential supplied at the second input node Vᵢₙ₂.

The circuit may comprise discharging means 3 and hence the charging means 2 may be arranged to co-operate with the discharging means 3 such that when the charging means 2 is in active state, thereby providing the electrical charge to the control terminal of the first switch S1, the discharging means 3 is in passive state, thus not intervening with the operation of the charging means 2 by simultaneously discharging the control terminal of the first switch S1. Conversely, when the charging means 2 is in passive state, the discharging means 3 is in active state and thereby operating to discharge the control terminal of the first switch S1.

In accordance with an embodiment of the invention, the charging means 2 is coupled to the first input node Vᵢₙ₁ and to the second input node Vᵢₙ₂. Furthermore, the charging means 2 has an output, which is coupled to or connected to the control terminal of the first switch S1

The charging means 2 comprises a charge storage 5 and a charge controller 6. The charge storage 5 is arranged to receive a first charge via the first input node Vᵢₙ₁ and to supply a second charge to the output of the charging means 2. The charge controller 6 is arranged to control the charge storage 5 to receive the first charge and to supply the second charge in response to the control potential applied at the second input node Vᵢₙ₂.

According to an embodiment of the invention, the charge controller 6 is arranged to control the charge storage 5 to receive the first charge from the first input node Vᵢₙ₁ in response to a first control potential value applied at the second input node Vᵢₙ₂, and to control the charge storage 5 to supply the second charge to the output of the charging means 2 in response to a second control potential applied at the second input node Vᵢₙ₂.

The employed first and second control potential values are selected such that they are low enough not to interfere with the normal operation of - e.g. cause a breakdown of or damage to - the switch S1, the components of the charging means 2 and/or discharging means 3. On the other hand, the first control potential value is selected such that it is arranged to cause the charge storage 5 to receive the first charge, whereas the second control potential value is selected such that it arranged to cause the charge storage 5 to supply the second charge. Furthermore, the second control potential value is selected such that it is arranged to cause the charge storage 5 to supply a second charge that is high enough for setting the switch S1 in the closed state.

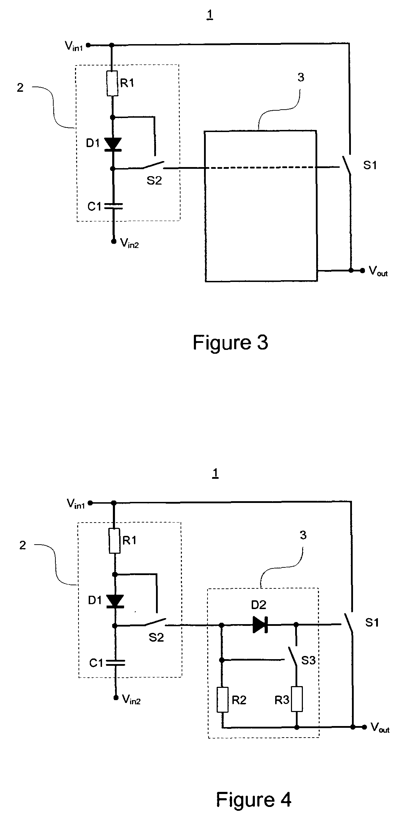

The charge storage 5 according to an embodiment of the invention comprises a capacitor C1, and the charge controller 6 comprises a diode D1 and an electrically controllable switch S2, referred to in the following as a second electrically controllable switch S2 to explicitly differentiate from the first electrically controllable switch S1. The charging means 2 may further comprise a resistor R1. The electric coupling between the components of the charging means 2 in accordance with an embodiment of the invention is discussed in detail hereinafter. An example of the circuit according to such an embodiment of the invention is illustrated in Figure 3 - showing also the (optional) discharging means 3.

The capacitor C1 has a first terminal and a second terminal. The first terminal of the capacitor C1 is coupled to the second input node Vᵢₙ₂. In Figure 3, the first terminal of the capacitor C1 is directly connected to the second input node Vᵢₙ₂. Alternatively, the first terminal of the capacitor C1 may be coupled to the second input node Vᵢₙ₂ via one or more intervening components (not shown in Figure 3).

A cathode of the diode D1 is coupled to the second terminal of the capacitor C1. In Figure 3, the cathode of the diode D1 is directly connected to the second terminal of the capacitor C1. Alternatively, the cathode of the diode D1 may be coupled to the second terminal of the capacitor C2 via one or more intervening components (not shown in Figure 3).

An anode of the diode D1 is coupled to the first input node Vᵢₙ₁. In Figure 3, the anode of the diode D1 is coupled to the first input node Vin1 via a resistor R1. In other words, in the example of Figure 3, the anode of the diode D1 is connected to first side of the resistor R1, whereas the other side of the resistor R1 is connected to the first input node Vᵢₙ₁. Alternatively, the anode of the diode D1 may be directly connected to the first input node Vᵢₙ₁, or the anode of the diode D1 may be coupled to the first input node Vᵢₙ₁ via one or more intervening elements in addition to the resistor R1. As a further alternative, the resistor R1 may be replaced by a number of resistors connected in series, thereby providing a resistance (essentially) matching that of the resistor R1.

The second electrically controllable switch S2 has a first terminal, a second terminal and a control terminal. The second switch S2 is arranged to operate in such a way that when the voltage (or charge) at its first terminal does not exceed the voltage (or charge) of its control terminal plus a threshold value, the second switch S2 is in the open state. Conversely, when the voltage (or charge) at the first input terminal (is equal to or) exceeds that of the control terminal plus the threshold value, the second switch S2 is in the closed state.

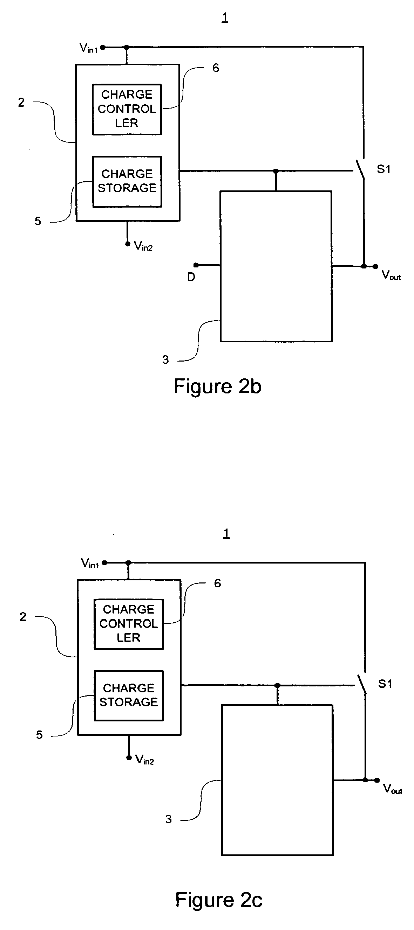

The first terminal of the second switch S2 is coupled to the second terminal of the capacitor C1, and hence also coupled to the cathode of the diode D1. The first terminal of the second switch S2 may be directly connected to the second terminal of the capacitor C1 and/or to the cathode of the diode D1, as shown in the example of Figure 2. Alternatively, the current path between the first terminal of the second switch S2 and the second terminal of the capacitor C1 may comprise one or more intervening components. Likewise, the current path between the first terminal of the second switch S2 and the cathode of the diode D1 may comprise one or more intervening components.

In the example of Figure 3, the second terminal of the second switch S2 constitutes the output of the charging means 2. In the example of Figure 3 the second terminal of the second switch S2 is coupled via the discharging means 3 to the control terminal of the first switch S1. In other embodiments the second terminal of the second switch S2 may be directly connected to the control terminal of the first switch S1 or it may be coupled to the control terminal of the first switch S1 via (other) intervening components, hence independently of the discharging means 3.

The control terminal of the second switch S2 is coupled to the first input node Vᵢₙ₁. In the example of Figure 3, the control terminal of the second switch S2 is coupled to the first input node Vᵢₙ₁ via a resistor R1. Thus, in the example of Figure 3, the control terminal of the second switch S2 is connected to first side of the resistor R1, whereas the other side of the resistor R1 is connected to the first input node Vᵢₙ₁. Alternatively, the control terminal of the second switch S2 may be directly connected to the first input node Vᵢₙ₁, or the control terminal of the second switch S2 may be coupled to the first input node Vᵢₙ₁ via one or more intervening elements in addition to the first resistor R1.

As a further example regarding the coupling between the first input node Vᵢₙ₁ and the anode of the diode D1 and the coupling between the first input node Vᵢₙ₁ and the control terminal of the second electrically controllable switch S2, if the anode of the diode D1 is coupled to the first input node Vᵢₙ₁ via the resistor R1, the control terminal of the second electrically controllable switch S2 may be coupled to the first input node Vᵢₙ₁ via another resistor (not shown) having resistance essentially matching that of the resistor R1.

The circuit 1 may comprise discharging means 3, as illustrated e.g. in the examples of Figures 2b, 2c, 3 and 4. The discharging means 3 is arranged to facilitate unloading the electrical charge from the control terminal of the first electrically controllable switch S1 in order to allow faster change between the open state and the closed state of the first switch S1. The discharging means 3 is coupled to the control terminal of the first switch S1 and it may be arranged to discharge the control terminal of the first switch S1 in order to set the first switch S1 into the open state in response to a discharging control signal.

In the example circuits of Figures 2c, 3 and 4 the output of the charging means 2 is coupled to the discharging means 3 such that the output of the charging means 2 also provides the discharging control signal to the discharging means. In such an arrangement the discharging means 3 is arranged to discharge the control terminal of the first switch S1 in response to the output signal of the charging means 2. In particular, the discharging means 3 may be arranged to discharge the control terminal of the first switch S1 in response to the first control potential value being supplied at the second input node. Conversely, in such an arrangement the discharging means 3 is arranged to discontinue providing the discharging operation in response to the second control potential value supplied at the second input node Vᵢₙ₂. An advantage of such an arrangement is that due to a suitable control potential value supplied at the second input node Vᵢₙ₂ also controlling the operation of the discharging means 3, no dedicated control mechanism is needed for driving the discharging means 3.

As an alternative, the discharging means 3 may be arranged to operate in response to a dedicated discharging control signal D, as illustrated in Figure 2b. Such a dedicated discharging control signal may be derived, for example, at least in part on the basis of the voltage supplied at the first input node Vᵢₙ₁ and/or of the control potential supplied at the second input node Vᵢₙ₂.

The discharging means 3 is arranged to co-operate with the charging means 2 such that when the charging means 2 is in active state thereby providing the electrical charge to the control terminal of the first electrically controllable switch S1, the discharging means 3 is in passive state, thus not intervening with the operation of the charging means 2 by simultaneously discharging the control terminal of the first electrically controllable switch S1. Conversely, when the charging means 2 is in passive state, the discharging means 3 is in active state and thereby operating to discharge the control terminal of the first electrically controllable switch S1.

The discharging means 3 is coupled to the control terminal of the first switch S1 and it may be coupled to the output node Vₒᵤₜ. Coupling the control terminal of the first switch S1 via the discharging means 3 to the output node Vₒᵤₜ has the advantage that it enables making use of the energy discharged from the control terminal of the first switch 1 by providing it to a load coupled to the output node Vₒᵤₜ. Alternatively, instead of the output node Vₒᵤₜ, the discharging means 3 may be coupled to a suitable potential, such as ground potential.

In accordance with an embodiment of the invention, the discharging control signal comprises the output of the charging means 2 and the discharging means 3 comprises a diode D2, a third electrically controllable switch S3 and resistors R2 and R3. The discharging means 3 is coupled to the output of the charging means 2, to the control terminal of the first switch S1 and to the output node Vₒᵤₜ. An example of such discharging means 3 is illustrated in Figure 4.

In the example of Figure 4, an anode of the diode D2 is coupled to the second terminal of the second switch S2 and hence coupled to the output of the charging means 2. Furthermore, a cathode of the diode D2 is coupled to the control terminal of the first switch S1. The third switch S3 has a first terminal, a second terminal and a control terminal. The first terminal of the third switch S3 is coupled to the control terminal of the first switch S1 and hence also coupled to the cathode of the diode D2. The second terminal of the third switch S3 is coupled to the output node Vₒᵤₜ via a second resistor R3, and the control terminal of the third switch is coupled to the second terminal of the second switch S2, which in this example is the output of the charging means 2. Furthermore, the control terminal of the third switch S3 is also coupled to the output node Vₒᵤₜ via a third resistor R2. Both the third resistor R2 and the second resistor R3 may be replaced by a number of resistors connected in series providing a combined resistance essentially matching that of the resistors R2 and R3, respectively. Typically, the resistance of the third resistor R2 is higher than that of the second resistor R3.

The third switch S3 of this example embodiment is arranged to operate in such a way that when the voltage (or charge) at its first terminal does not exceed the voltage (or charge) of its control terminal plus a threshold value, the switch S3 is in the open state. Conversely, when the voltage (or charge) at the first input terminal (is equal to or) exceeds that of the control terminal plus the threshold value, the third switch S3 is in the closed state. Here the threshold value can be any positive value, including zero.

The first electrically controllable switch S1 of the circuit 1 may operate, for instance, as a high side switch of a power converter circuit, such as a buck converter circuit, a half-bridge circuit or a full bridge circuit, as described in detail in the following examples.

The circuit 1 may be arranged to set the switch S1 into the open state or into the closed state, in response to the input potential (or voltage) provided to first input node Vᵢₙ₁ and to the first control potential provided to the second input node Vᵢₙ₂.

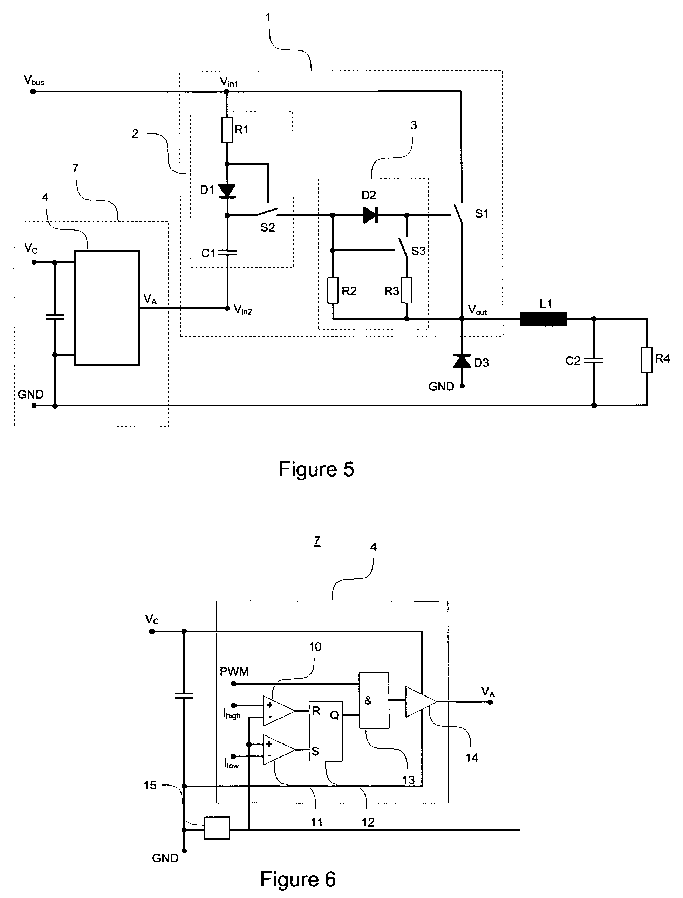

In the following, an example of the operation of the circuit 1 according to an embodiment of the invention for driving a switch of a power converter circuit is described in connection with a buck converter circuit, as illustrated in Figure 5. In the example circuit arrangement of Figure 5, the first input node Vᵢₙ₁ is connected to a voltage supply V_{bus} providing the first potential and the second input node Vᵢₙ₂ is connected to a control signal provided by a control voltage source V_{A}. Hence, the first electrically controllable switch S1 acts as a high side switch of the buck converter circuit. The output node Vₒᵤₜ of the circuit 1 is coupled to a cathode of a third diode D3 having an anode coupled to a ground potential. The output node Vₒᵤₜ of the circuit 1 is also coupled to an inductor L1, which in turn is coupled to a first terminal of a second capacitor C2 and via a resistor R4 to the ground potential. The second terminal of the capacitor C2 is also connected to the ground potential. In the circuit arrangement of Figure 5 the buck converter circuit is thus formed by the first switch S1, the third diode D3 and the inductor L1, coupled to the load represented by a fourth resistor R4 connected in parallel with the second capacitor C2.

A control circuit 4 is arranged to provide the control voltage source V_{A}. The control circuit 4 may comprise for example an integrated circuit (IC), a microprocessor, a microcontroller or another suitable electric component arranged to provide a control voltage suitable to operate the circuit 1, as discussed hereinafter.

An example of the control circuit 4 is illustrated in Figure 6, corresponding to the subsection 7 of the circuit arrangement of Figure 5. The control circuit 4 comprises comparators 10 and 11, arranged to compare an indicator value determined at least in part on the basis of the current measured by the current measuring element 15 to reference values I_{high} and I_{low}, respectively. The current measuring element 15 may be for example a resistor configured for this purpose. The outputs of the comparators 10 and 11 are connected as inputs of the RS flip-flop 12, which is arranged to generate an output signal connected to the AND-port 13. The RS flip-flop 12 keeps its output unchanged while the indicator value remains between the reference values I_{high} and I_{low}, the RS flip-flop 12 changes its output to a value corresponding "zero" if the indicator value is higher than or equal to the reference value I_{high}, and the RS flip-flop 12 changes its output to a value corresponding to "one" if the indicator value is lower than or equal to the reference value I_{low}. The AND-port 13 has a pulse width modulation (PWM) signal as the second input, which is used together with the output signal of the RS flip-flop 12 to generate a driving signal to the voltage source 14 for providing the control voltage source V_{A}. A desired control signal, such as a pulse train as described hereinbefore, may be provided for example by altering the PWM signal accordingly.

The first voltage source V_{bus} is arranged to provide a constant or essentially constant first potential (or voltage), and the control circuit 4 is arranged to provide the first control signal by the voltage source V_{A} as a pulse train as described hereinbefore, comprising pulses having amplitude determined by the difference between a first control potential value and the second control potential value, wherein the first control potential value is lower than the second control potential value. In the following, the first control potential value is referred to as a low control potential and the second control potential value is referred to as a high control potential.

The control terminal of the second switch S2, being coupled to the first input node Vᵢₙ₁ is charged at a potential determined by the potential (or voltage) supplied at the first input node Vᵢₙ₁ and is hence charged at the first potential.

When the control voltage source V_{A} provides voltage corresponding to the low control potential, the second input node Vᵢₙ₂ and the first terminal of the capacitor C1 coupled thereto are likewise at the low control potential. The second terminal of the capacitor C1 becomes charged at the first potential due to coupling via the diode D1 to the first input node Vᵢₙ₁. Hence, the voltage across the terminals of the capacitor C1 is the potential at the first input node Vᵢₙ₁, i.e. the first potential, subtracted by the forward voltage of the diode D1 and by the low control potential. For example in case the low control potential is 0 V (or essentially 0 V), the voltage across the capacitor C1 is the voltage at the first input node Vᵢₙ₁ subtracted by the forward voltage of the diode D1.

Due to the first terminal of the second electrically controllable switch S2 being likewise coupled to the first input node Vᵢₙ₁ via the diode D1, the potential at the first terminal of the second switch S2 is the same as the potential at the second terminal of the capacitor C1 discussed above.

Consequently, the voltage at the second input node Vᵢₙ₂ being at the low control potential results in the voltage at the control terminal of the second switch S2 being higher than the voltage at the first terminal of the second switch S2, keeping the switch S2 in the open state, hence not enabling electric current flow to the output of the charging means 2, thereby ensuring that also the first switch S1 kept in the open state.

When the control voltage source V_{A} is changed from the low control potential to the high control potential, the potential (or voltage) at the second input node Vᵢₙ₂ assumes the high control potential, causing the charge in the first terminal of the capacitor C1 to increase by the amount of the difference between the high control potential and the low control potential, thereby resulting in the potential (or voltage) at the first terminal of the second switch S2 to rise above that of the control terminal of the second switch S2 by the amount determined by the difference between the high control potential and the low control potential. Consequently, the second switch S2 is set to the closed state, hence enabling electric current to flow to the control terminal of the first switch S1, thereby charging the control terminal of the first electrically controllable switch S1.

Hence, charging the control terminal of the first switch S1 results in the first switch S1 to be set in the closed state, allowing electric current to flow from the first input node Vᵢₙ₁ to the inductor L1 via the output node Vₒᵤₜ.

Upon the control voltage source V_{A} being changed from the low control potential to the high control potential, the discharging means 3 is set to a passive state, thereby not enabling discharging of the control terminal of the first switch S1. As an example, according to an embodiment illustrated for example in Figure 3, when the second switch S2 is in the closed state, electric current is able to flow via the diode D2 to the control terminal of the first switch S1. This sets the potential (or voltage) at the first terminal of the third switch S3 to a value that is equal to the potential (or voltage) of the control terminal of the third switch S3 minus the forward voltage of the diode D2. Consequently, the third switch S3 is in the open state, resulting in the discharging means 3 being in the passive state.

When the control voltage input V_{A} is changed from the high control potential back to the low control potential, the charge at the second terminal of the capacitor C1 becomes again that of Vᵢₙ₁, hence corresponding to the first potential, subtracted by the forward voltage of the diode D1 and by the the low control potential. Consequently, the voltage at the second input node Vᵢₙ₂ being at the low control potential results in the potential (or voltage) at the control terminal of the second switch S2 being higher than that of the first terminal of the second switch S2, keeping the second switch S2 in the open state. Therefore, electric current does not flow to the control terminal of the first switch S1, thereby setting also the first switch S1 into the open state.

As a consequence, the first terminal of the third switch S3 assumes the potential (or voltage) of the control terminal of the first switch S1, whereas the control terminal of the third switch S3 is provided with no charge. Thus, the potential (or voltage) at the control terminal of the third switch S3 becomes lower than the voltage at the first input terminal of the third switch S3, thereby setting the third switch S3 in to the closed state and resulting in discharging of the control terminal of the first switch S1 via the third switch S3.

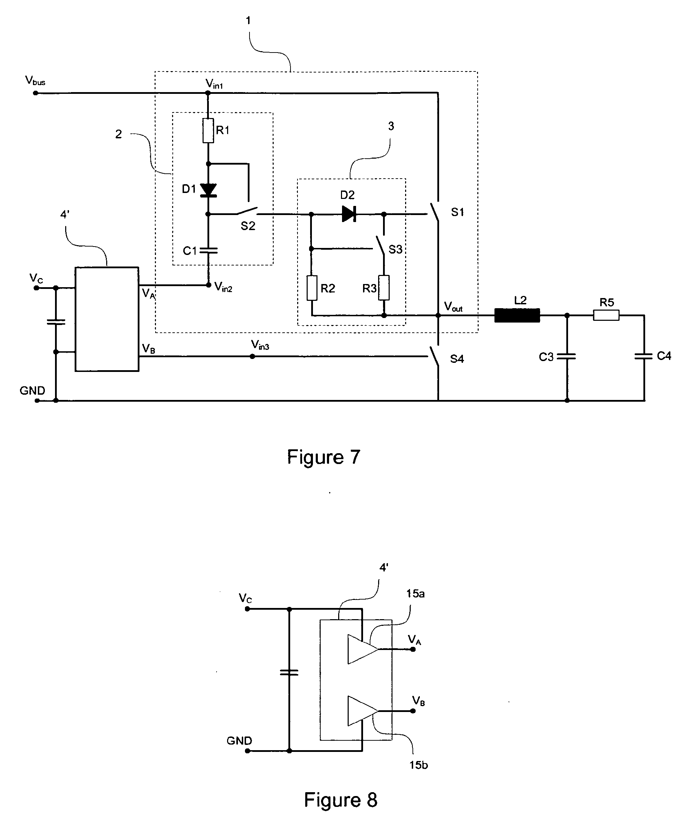

In the following, as another example, operation of the circuit 1 for driving a switch of a power converter circuit is described in connection with a half-bridge circuit as illustrated by an example in Figure 7. As in the case of the buck converter circuit of Figure 5, in the example circuit arrangement of Figure 7 the first input node Vᵢₙ₁ is connected to a voltage supply V_{bus} providing the first potential, the second input node Vᵢₙ₂ is connected to a control signal provided by the control voltage source V_{A} and the first electrically controllable switch S1 acts as a high side switch of the half-bridge circuit. The output node Vₒᵤₜ of the circuit 1 is coupled to a first terminal of a fourth electrically controllable switch S4, having a second terminal coupled to a ground potential and a control terminal coupled to a third input node Vᵢₙ₃, which is connectable to a second control signal provided by a second control voltage source V_{B}. The characteristics of the fourth switch S4 are typically similar to those of the first electrically controllable switch S1.

The second control signal provided by the second control voltage source V_{B} shown in the example circuit arrangement of Figure 7 has similar characteristics as the first control voltage source V_{A} discussed hereinbefore. The output node Vₒᵤₜ of the circuit 1 is also coupled to an inductor L2, which in turn is coupled to a first terminal of a third capacitor C3 having a second terminal coupled to the ground potential, and via a load represented by the fifth resistor R5 to the first terminal of a fourth capacitor C4 having a second terminal coupled to the ground potential. In the circuit arrangement of Figure 7 the half-bridge circuit is thus formed by the first switch S1 and the fourth switch S4, connected to a load formed by the arrangement of the inductor L2, the resistor R5 and the capacitors C3 and C4, as described hereinbefore.

A control circuit 4' is arranged to provide the control voltage sources V_{A} and V_{B}. The control circuit 4' may comprise for example an integrated circuit (IC), a microprocessor, a microcontroller or another suitable electric component arranged to provide control voltages suitable for operating the circuit 1.

An example of the control circuit 4' is illustrated in Figure 8. The control circuit 4' comprises the voltage sources 15a and 15b that are arranged to provide the control voltages V_{A} and V_{B}, respectively, in a manner described in detail in the following.

The operation of the circuit 1, i.e. the charging means 2 and the discharging means 3 is similar to that described hereinbefore for the example circuit arrangement of Figure 5. Furthermore, the first voltage source V_{bus} is arranged to provide a first potential (or voltage) in a manner similar to that described for the example circuit arrangement of Figure 5, and the control circuit 4' is arranged to provide the control voltage source V_{A} in a manner similar to that described for the example circuit arrangement of Figure 5. The control circuit 4' is further arranged to provide the control voltage source V_{B} in such a way that when the control voltage source V_{A} is in the high control potential, the control voltage source V_{B} is in the low control potential. Conversely, when the control voltage source V_{A} is in the low control potential, the control voltage source V_{B} is in the high control potential.

The control circuit 4' may be arranged to change the control voltage source V_{A} from the high control potential to the low control potential for the control voltage essentially simultaneously with changing the voltage source V_{B} from the low control potential to the high control potential, and vice versa. This ensures that only one of the electrically controllable switches S1 and S4 is in the closed state at a given point of time. The control circuit 4' may be further arranged to introduce an off-time in changing between the high and low control potentials such that when changing the control voltage source V_{A} from the high control potential to the low control potential, the control voltage source V_{B} is changed from the low control potential to the high control potential only after an off-time period of to after the first control voltage has been changed to the low control potential. The off-time tₒ may be a fixed value or it may be changed in response to one or more control signals provided to the control circuit 4' (not shown). A similar off-time arrangement may be applied when changing the control voltage source V_{B} to the low control potential and the control voltage source V_{A} to the high potential.

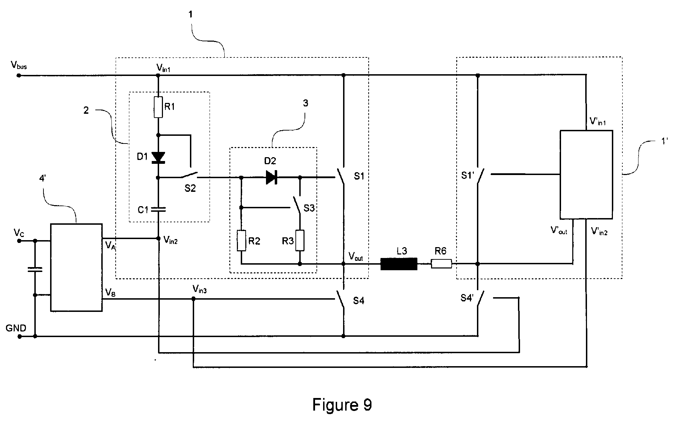

In the following, as a further example, operation of the circuit 1 for driving a switch of a power converter circuit is described in connection with a full bridge circuit as illustrated by an example in Figure 9. As in the case of the half-bridge circuit of Figure 7, in the example circuit arrangement of Figure 9 the first input node Vᵢₙ₁ of the circuit 1 is connected to a voltage supply V_{bus} providing the first potential, the second input node Vᵢₙ₂ of the circuit 1 is connected to a control signal provided by the control voltage source V_{A} and the first electrically controllable switch S1 acts as a first high side switch of the full bridge circuit. The output node Vₒᵤₜ of the circuit 1 is coupled to a first terminal of a fourth electrically controllable switch S4, having a second terminal coupled to a ground potential and a control terminal coupled to a third input node Vᵢₙ₃, which is connectable to a second control signal provided by a second control voltage source V_{B}. The characteristics of the fourth switch S4 are typically similar to those of the first electrically controllable switch S1.

The full bridge circuit of Figure 9 further comprises a circuit 1', which is similar to the circuit 1. The first input node V'ᵢₙ₁ of the circuit 1' is connected to a voltage supply V_{bus} providing the first potential, the second input node V'ᵢₙ₂ of the circuit 1' is connected to a control signal provided by the control voltage source V_{B} and the fifth electrically controllable switch S1' acts as a second high side switch of the full bridge circuit. The output node V'ₒᵤₜ of the circuit 1' is coupled to a first terminal of a sixth electrically controllable switch S4', having a second terminal coupled to a ground potential and a control terminal coupled to the first control signal provided by the first control voltage source V_{A}. The characteristics of the fifth switch S1' are typically similar to those of the first switch S1, and the characteristics of the sixth switch S4' are typically similar to those of the fourth electrically controllable switch S4.

The control circuit 4' is arranged to provide the control voltage sources V_{A} and V_{B}. in a manner similar to that described for the half-bridge circuit of Figure 7 hereinbefore.

A load to which a circuit arrangement comprising the circuit 1 is used to supply power may comprise for example a light element. For instance, a buck converter circuit comprising or coupled to the circuit 1 may be employed as a power supply to a load comprising a LED or a string of LED. As another example, a half-bridge circuit comprising or coupled to the circuit 1 may be applied as a power supply to a load comprising a fluorescent lamp. As a further example, a full bridge circuit comprising or coupled to the circuit 1 may be employed as a power supply to a load comprising a high-intensity discharge (HID) lamp

The electrically controllable switches S1, S1', S2, S3, S4 and S4' may comprise or may be implemented for example as suitable transistors.

The first electrically controllable switch S1 may comprise for example a metal oxide semiconductor field-effect transistor (MOSFET) that is designed to handle high power levels, also referred to as a power MOSFET. Such a power MOSFET may be for example a n-channel power MOSFET. In case a power MOSFET is used as the first electrically controllable switch S1, the first terminal of the first electrically controllable switch S1 may be a drain of the power MOSFET, the second terminal of the first electrically controllable switch S1 may be source of the power MOSFET, and the control terminal of the first electrically controllable switch S1 may be a gate of the power MOSFET. Similar considerations apply also to the electrically controllable switches S1', S4 and S4'.

The second electrically controllable switch S2 may comprise for example a transistor of MOSFET type having a p-type channel, also referred to as pMOSFET or pMOS. In case a pMOS is used as the second electrically controllable switch S2, the first terminal of the second electrically controllable switch S2 may be a source of the pMOS, the second terminal of the second electrically controllable switch S2 may be a drain of the pMOS, and the control terminal of the second electrically controllable switch S2 may be a gate of the pMOS.

Alternatively, the second electrically controllable switch S2 may comprise for example a bipolar junction transistor (BJT) of PNP-type. In case a PNP transistor is used as the second electrically controllable switch S2, the first terminal of the second electrically controllable switch S2 may be a collector of the PNP transistor, the second terminal of the second electrically controllable switch S2 may be an emitter of the PNP transistor, and the control terminal of the second electrically controllable switch S2 may be a base of the PNP transistor. If used in an embodiment of the invention illustrated e.g. in Figures 3 and 4, the base of the PNP transistor may be coupled to the first input node Vᵢₙ and to the anode of the diode D1 via a further resistor.

The third electrically controllable switch S3 may comprise for example a BJT transistor of PNP-type. In case a PNP transistor is used as the third electrically controllable switch S3, the first terminal of the third electrically controllable switch S3 may be a collector of the PNP transistor, the second terminal of the third electrically controllable switch S3 may be an emitter of the PNP transistor, and the control terminal of the third electrically controllable switch S3 may be a base of the PNP transistor.

Alternatively, the third electrically controllable switch S3 may comprise for example a pMOS transistor. In case a pMOS is used as the third electrically controllable switch S3, the first terminal of the second electrically controllable switch S3 may be a source of the pMOS, the second terminal of the third electrically controllable switch S3 may be a drain of the pMOS, and the control terminal of the third electrically controllable switch S3 may be a gate of the pMOS.

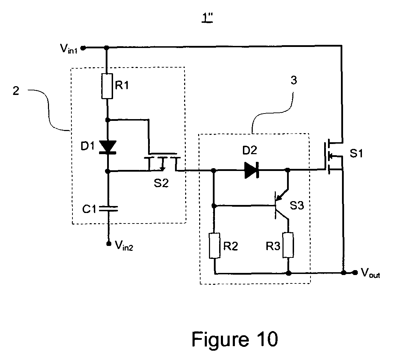

As an example of a design of the circuit 1, Figure 10 illustrates a circuit 1" in accordance with an embodiment of the invention, having a power MOSFET transistor as the first electrically controllable switch S1, a PMOS transistor as the second electrically controllable switch S2, and a PNP transistor as the third electrically controllable switch S3.

For each electrically controllable switch S1, S2, S3 (and S4) the component(s) comprised therein are selected in accordance with the characteristics of the respective voltage sources to which the first input node Vᵢₙ₁ and Vᵢₙ₂ are to be connected. In particular, the components must be able to handle the voltage ranges - and resulting electric currents - supplied therein.

Furthermore, the capacitor C1, the diodes D1 and D2, and the resistors R1, R2 and R3 are selected in accordance with the employed electrically controllable switches S1, S2, S3 (and S4). As an example, in an embodiment of the invention employing a power MOSFET as the first electrically controllable switch S1, a PMOS as the second electrically controllable switch S2 and a PNP transistor as the third electrically controllable switch S3, i.e. like the one illustrated in Figure 10, the capacitor C1 may have a capacitance of 47 nF, the first resistor R1 may have a resistance of 47 Ω, the second resistor R3 may have a resistance of 1 kΩ and the third resistor R2 may have a resistance of 10 Ω.

## Claims

1. A circuit (1, 1') for driving a switch (S1) of a power converter circuit arranged to supply power to a light element, the circuit comprising
- a first input node (Vᵢₙ₁), connectable to a first potential (V_{bus}),
- a second input node (Vᵢₙ₂), connectable to a first control signal (V_{A}), arranged to provide a control potential that is lower than the first potential,
- an output node(Vₒᵤₜ),
- a first electrically controllable switch (S1) as a high side switch of the power converter circuit, the first electrically controllable switch (S1) having a first terminal coupled to the first input node(Vᵢₙ₁) and a second terminal coupled to the output node(Vₒᵤₜ), and
- charging means (2) coupled to the first input node (Vᵢₙ₁) and to the second input node (Vᵢₙ₂), the charging means (2) having an output coupled to a control terminal of the first electrically controllable switch (S1),
**characterized in that** the charging means (2) comprises
o a charge storage (5) comprising a capacitor (C1) having a first terminal coupled to the second input node (Vᵢₙ₂) and a second terminal coupled to the first input node (Vᵢₙ₁), the charge storage (5) arranged to receive a first charge via the first input node (Vᵢₙ₁) and to supply a second charge to the output of the charging means (2), and
o a charge controller (6) arranged to control the charge storage (5) to receive the first charge and to supply the second charge in response to the control potential applied at the second input node (Vᵢₙ₂).

2. A circuit according to claim 1, wherein the charge controller is arranged
- to control the charge storage (5) to receive the first charge from the first input node (Vᵢₙ₁) in response to a first control potential applied at the second input node (Vᵢₙ₂), and
- to control the charge storage (5) to supply the second charge to the output of the charging means (2) in response to a second control potential applied at the second input node (Vᵢₙ₂).

3. A circuit according to claim 1 or 2, wherein
- the charge controller (6) comprises
o a diode (D1) having a cathode coupled to the second terminal of the capacitor (C1) and an anode coupled to the first input node (Vᵢₙ₁), and
o a second electrically controllable switch (S2) having a first terminal coupled to the second terminal of the capacitor (C1), a second terminal coupled to a control terminal of the first electrically controllable switch (S1), and a control terminal coupled to the first input node(Vᵢₙ₁),

4. A circuit according to any of claims 1 to 3, wherein the second electrically controllable switch (S2) is a PMOS transistor.

5. A circuit according to claim 4, wherein the first terminal of the second electrically controllable switch (S2) is a source of the PMOS transistor, the second terminal of the second electrically controllable switch (S2) is a drain of the PMOS transistor, and the control terminal of the second electrically controllable switch (S2) is a gate of the PMOS transistor.

6. A circuit according to any of claims 1 to 5, further comprising discharging means (3) coupled to the control terminal of the first electrically controllable switch (S1), the discharging means (3) being arranged to discharge the control terminal of the first electrically controllable switch (S1) in response to a discharging control signal.

7. A circuit according to claim 6, wherein the discharging control signal comprises the output of the charging means (2), and wherein the discharging means (3) comprises
- a second diode (D2) having an anode coupled to the second terminal of the second electrically controllable switch (S2) and a cathode coupled to the control terminal of the first electrically controlled switch (S1), and
- a third electrically controllable switch (S3) having
o a first terminal coupled to the control terminal of the first electrically controllable switch (S1),
o a second terminal coupled to the output node via a second resistor (R3), and
o a control terminal coupled to the second terminal of the second electrically controllable switch (S2) and coupled to the output node via a third resistor (R2).

8. A circuit according to claim 7, wherein the third electrically controllable switch (S3) is a PNP transistor.

9. A circuit according to claim 8, wherein the first terminal of the third electrically controllable switch (S3) is an emitter of the PNP transistor, the second terminal of the third electrically controllable switch (S3) is a collector of the PNP transistor, and the control terminal of the third electrically controllable switch (S3) is a base of the PNP transistor.

10. A circuit according to any of claims 1 to 9, wherein the first electrically controllable switch (S1) is a power MOSFET.

11. A circuit according to claim 10, wherein the first terminal of the first electrically controllable switch (S1) is the drain of the power MOSFET and the second terminal of the first electrically controllable switch (S1) is the source of the power MOSFET.

12. A circuit according to any of claims 1 to 11, further comprising a third diode (D3) [of the power supply], the diode (D3) having a cathode coupled to the output node (Vₒᵤₜ) and an anode coupled to a ground potential, and an inductor (L1) having a first terminal coupled to the output node (Vₒᵤₜ) and a second terminal connectable to a load (R4).

13. A circuit according to any of claims 1 to 11, further comprising a fourth electrically controllable switch (S4) having
- a first terminal coupled to the output node (Vₒᵤₜ),
- a second terminal coupled to a ground potential, and
- a control terminal coupled to a third input node connectable to a second control input (V_{A}), arranged to provide a control potential that is lower than the first potential.

14. A circuit according to claim 13, wherein the fourth electrically controllable switch (S4) is a second power MOSFET.

15. A circuit according to claim 14, wherein the first terminal of the fourth electrically controllable switch (S4) is a drain of the second power MOSFET and the second terminal of the fourth electrically controllable switch (S4) is a source of the second power MOSFET.

16. Use of a circuit (1) according to any of the preceding claims for driving a power converter circuit.

## Patentansprüche

1. Schaltung (1, 1') zum Betätigen eines Schalters (S1) einer Leistungsumrichterschaltung, die zum Liefern von Energie an ein Lichtelement ausgelegt ist, wobei die Schaltung Folgendes umfasst:
- einen ersten Eingangsknoten (Vᵢₙ₁), der an ein erstes Potenzial angeschlossen werden kann (V_{bus}),
- einen zweiten Eingangsknoten (Vᵢₙ₂), der an ein erstes Steuersignal (V_{A}) angeschlossen werden kann und zum Bereitstellen eines Steuerpotenzials ausgelegt ist, das niedriger als das erste Potenzial ist,
- einen Ausgangsknoten (Vₒᵤₜ),
- einen ersten elektrisch steuerbaren Schalter (S1) als einen Hochspannungsschalter der Leistungsumrichterschaltung, wobei der erste elektrisch steuerbare Schalter (S1) einen ersten Anschluss hat, der mit dem ersten Eingangsknoten (Vᵢₙ₁) verbunden ist, und einen zweiten Anschluss, der mit dem Ausgangsknoten (Vₒᵤₜ) verbunden ist, und
- Lademittel (2), das mit dem ersten Eingangsknoten (Vᵢₙ₁) und mit dem zweiten Eingangsknoten (Vᵢₙ₂) verbunden ist, wobei das Lademittel (2) einen Ausgang hat, der mit einem Steueranschluss des ersten elektrisch steuerbaren Schalters (S1) verbunden ist,
**dadurch gekennzeichnet, dass** das Lademittel (2) Folgendes umfasst
o eine Ladungsspeicherung (5), die einen Kondensator (C1) umfasst, der einen ersten Anschluss hat, welcher mit dem zweiten Eingangsknoten (Vᵢₙ₂) verbunden ist, und einen zweiten Anschluss, der mit dem ersten Eingangsknoten (Vᵢₙ₁) verbunden ist, wobei die Ladungsspeicherung (5) zum Aufnehmen einer ersten Ladung über den ersten Eingangsknoten (Vᵢₙ₁) und zum Liefern einer zweiten Ladung an den Ausgang des Lademittels (2) ausgelegt ist, und
o einen Ladungscontroller (6), der zum Steuern der Ladungsspeicherung (5) ausgelegt ist, um die erste Ladung zu empfangen und die zweite Ladung als Reaktion auf das Kontrollpotenzial, das an den zweiten Eingangsknoten (Vᵢₙ₂) angelegt ist, zu liefern.

2. Schaltung nach Anspruch 1, wobei der Ladungscontroller für Folgendes ausgelegt ist
- zum Steuern der Ladungsspeicherung (5), um die erste Ladung vom ersten Eingangsknoten (Vᵢₙ₁) zu erhalten als Reaktion auf ein erstes Kontrollpotenzial, das an den zweiten Eingangsknoten (Vᵢₙ₂) angelegt ist, und
- zum Steuern der Ladungsspeicherung (5), um die zweite Ladung als Reaktion auf ein zweites Kontrollpotenzial, das an den zweiten Eingangsknoten (Vᵢₙ₂) angelegt ist, an den Ausgang des Lademittels (2) zu liefern.

3. Schaltung nach Anspruch 1 oder 2, wobei
- der Ladungscontroller (6) Folgendes umfasst
∘ eine Diode (D1), die eine Katode hat, welche mit dem zweiten Anschluss des Kondensators (C1) verbunden ist, und eine Anode, die mit dem ersten Eingangsknoten (Vᵢₙ₁) verbunden ist, und
o einen zweiten elektrisch steuerbaren Schalter (S2), der einen ersten Anschluss hat, welcher mit dem zweiten Anschluss des Kondensators (C1) verbunden ist, einen zweiten Anschluss, der mit einem Steueranschluss des ersten elektrisch steuerbaren Schalters (S1) verbunden ist, und einen Steueranschluss, der mit dem ersten Eingangsknoten (Vᵢₙ₁) verbunden ist,

4. Schaltung nach einem der Ansprüche 1 bis 3, wobei der zweite elektrisch steuerbare Schalter (S2) ein PMOS-Transistor ist.

5. Schaltung nach Anspruch 4, wobei der erste Anschluss des zweiten elektrisch steuerbaren Schalters (S2) eine Source des PMOS-Transistors ist, der zweite Anschluss des zweiten elektrisch steuerbaren Schalters (S2) ein Drain des PMOS-Transistors ist, und der Steueranschluss des zweiten elektrisch steuerbaren Schalters (S2) ein Gate des PMOS-Transistors ist.

6. Schaltung nach einem der Ansprüche 1 bis 5, die ferner ein Entladungsmittel (3) umfasst, das mit dem Steueranschluss des ersten elektrisch steuerbaren Schalters (S1) verbunden ist, wobei das Entladungsmittel (3) dafür ausgelegt ist, den Steueranschluss des ersten elektrisch steuerbaren Schalters (S1) als Reaktion auf ein Entladungssteuersignal zu entladen.

7. Schaltung nach Anspruch 6, wobei das Entladungssteuersignal die Ausgabe des Lademittels (2) umfasst und wobei das Entladungsmittel (3) Folgendes umfasst
- eine zweite Diode (D2), die eine Anode hat, welche mit dem zweiten Anschluss des zweiten elektrisch steuerbaren Schalters (S2) verbunden ist, und eine Katode, die mit dem Steueranschluss des ersten elektrisch gesteuerten Schalters (S1) verbunden ist, und
- einen dritten elektrisch steuerbaren Schalter (S3), der Folgendes hat
∘ einen ersten Anschluss, der mit dem Steueranschluss des ersten elektrisch steuerbaren Schalters (S1) verbunden ist,
o einen zweiten Anschluss, der mit dem Ausgangsknoten über einen zweiten Widerstand (R3) verbunden ist, und
o einen Steueranschluss, der mit dem zweiten Anschluss des zweiten elektrisch steuerbaren Schalters (S2) verbunden ist, und mit dem Ausgangsknoten über einen dritten Widerstand (R2) verbunden ist.

8. Schaltung nach Anspruch 7, wobei der dritte elektrisch steuerbare Schalter (S3) ein PNP-Transistor ist.

9. Schaltung nach Anspruch 8, wobei der erste Anschluss des dritten elektrisch steuerbaren Schalters (S3) ein Emitter des PNP-Transistors ist, der zweite Anschluss des dritten elektrisch steuerbaren Schalters (S3) ein Kollektor des PNP-Transistors ist, und der Steueranschluss des dritten elektrisch steuerbaren Schalters (S3) eine Basis des PNP-Transistors ist.

10. Schaltung nach einem der Ansprüche 1 bis 9, wobei der erste elektrisch steuerbare Schalter (S1) ein Leistungs-MOSFET ist.

11. Schaltung nach Anspruch 10, wobei der erste Anschluss des ersten elektrisch steuerbaren Schalters (S1) der Drain des Leistungs-MOSFET ist, und der zweite Anschluss des ersten elektrisch steuerbaren Schalters (S1) die Source des Leistungs-MOSFET ist.

12. Schaltung nach einem der Ansprüche 1 bis 11, die ferner eine dritte Diode (D3) [der Stromversorgung] umfasst, wobei die Diode (D3) eine Katode hat, die mit dem Ausgangsknoten (Vₒᵤₜ) verbunden ist, und eine Anode, die mit einem Erdpotenzial verbunden ist, und einen Induktor (L1), der ein ersten Anschluss hat, welcher mit dem Ausgangsknoten (Vₒᵤₜ) verbunden ist, und einen zweiten Anschluss, der mit einer Last (R4) verbunden werden kann.

13. Schaltung nach einem der Ansprüche 1 bis 11, die ferner einen vierten elektrisch steuerbaren Schalter (S4) umfasst, der Folgendes hat
- einen ersten Anschluss, der mit dem Ausgangsknoten (Vₒᵤₜ) verbunden ist,
- einen zweiten Anschluss, der mit einem Erdpotenzial verbunden ist, und
- einen Steueranschluss, der mit einem dritten Eingangsknoten verbunden ist, der an einen zweiten Steuereingang (Va) angeschlossen werden kann und zum Bereitstellen eines Kontrollpotenzials ausgelegt ist, das niedriger als das erste Potenzial ist.

14. Schaltung nach Anspruch 13, wobei der vierte elektrisch steuerbare Schalter (S4) ein zweiter Leistungs-MOSFET ist.

15. Schaltung nach Anspruch 14, wobei der erste Anschluss des vierten elektrisch steuerbaren Schalters (S4) ein Drain des zweiten Leistungs-MOSFET ist und der zweite Anschluss des vierten elektrisch steuerbaren Schalters (S4) eine Source des zweiten Leistungs-MOSFET ist.

16. Verwendung einer Schaltung (1) nach einem der vorhergehenden Ansprüche zum Betätigen einer Leistungsumrichterschaltung.

## Revendications

1. Circuit (1, 1') pour actionner un commutateur (S1) d'un circuit de conversion de puissance conçu pour fournir de l'électricité à un élément lumineux, lequel circuit comprend :
- un premier noeud d'entrée (Vᵢₙ₁) venant se connecter à un premier potentiel (V_{bus}) ;
- un second noeud d'entrée (Vᵢₙ₂) venant se connecter à un premier signal de commande (V_{A}) conçu pour fournir un potentiel de commande qui est inférieur au premier potentiel ;
- un noeud de sortie (Vₒᵤₜ) ;
- un premier commutateur commandé électriquement (S1) en qualité de commutateur côté haut du circuit de conversion de puissance, le premier commutateur commandé électriquement (S1) possédant une première borne couplée au premier noeud d'entrée (Vᵢₙ₁) et une seconde borne couplée au noeud de sortie (Vₒᵤₜ) ; et
- un moyen de chargement (2) couplé au premier noeud d'entrée (Vᵢₙ₁) et au second noeud d'entrée (Vᵢₙ₂), lequel moyen de chargement (2) possède une sortie couplée à une borne de commande du premier commutateur commandé électriquement (S1) ;
**caractérisé en ce que** le moyen de chargement (2) comprend :
- un stockage de charge (5) comprenant un condensateur (C1) possédant une première borne couplée au second noeud d'entrée (Vᵢₙ₂) et une seconde borne couplée au premier noeud d'entrée (Vᵢₙ₁), lequel stockage de charge (5) est conçu pour recevoir une première charge via le premier noeud d'entrée (Vᵢₙ₁) et fournir une seconde charge vers la sortie du moyen de chargement (2) ; et
- une unité de commande de charge (6) conçue pour commander le stockage de charge (5) afin de recevoir la première charge et de fournir la seconde charge à la suite d'un potentiel de commande appliqué au second noeud d'entrée (Vᵢₙ₂).

2. Circuit selon la revendication 1, dans lequel l'unité de commande de charge est conçue pour :
- commander le stockage de charge (5) afin de recevoir la première charge depuis le premier noeud d'entrée (Vᵢₙ₁) à la suite d'un premier potentiel de commande appliqué au second noeud d'entrée (Vᵢₙ₂) ; et
- commander le stockage de charge (5) afin de fournir la seconde charge vers la sortie du moyen de chargement (2) à la suite d'un second potentiel de commande appliqué au second noeud d'entrée (Vᵢₙ₂).

3. Circuit selon la revendication 1 ou 2, dans lequel l'unité de commande de charge (6) comprend :
- une diode (D1) comprenant une cathode couplée à la seconde borne du condensateur (C1) et une anode couplée au premier noeud d'entrée (Vᵢₙ₁) ; et
- un second commutateur commandé électriquement (S2) comprenant une première borne couplée à la seconde borne du condensateur (C1), une seconde borne couplée à une borne de commande du premier commutateur commandé électriquement (S1), et une borne de commande couplée au premier noeud d'entrée (Vᵢₙ₁).

4. Circuit selon l'une quelconque des revendications 1 à 3, dans lequel le second commutateur commandé électriquement (S2) est un transistor PMOS.

5. Circuit selon la revendication 4, dans lequel la première borne du second commutateur commandé électriquement (S2) est une source du transistor PMOS, la seconde borne du second commutateur commandé électriquement (S2) est un drain du transistor PMOS, et l'électrode de commande du second commutateur commandé électriquement (S2) est une grille du transistor PMOS.

6. Circuit selon l'une quelconque des revendications 1 à 5, comprenant en outre un moyen de déchargement (3) couplé à la borne de commande du premier commutateur commandé électriquement (S1), le moyen de déchargement (3) étant conçu pour décharger la borne de commande du premier commutateur commandé électriquement (S1) à la suite d'un signal de commande de déchargement.

7. Circuit selon la revendication 6, dans lequel le signal de commande de déchargement comprend la sortie du moyen de chargement (2), et dans lequel le moyen de déchargement (3) comprend :
- une seconde diode (D2) comprenant une anode couplée à la seconde borne du second commutateur commandé électriquement (S2) et une anode couplée à la borne de commande du premier commutateur commandé électriquement (S1) ; et
- un troisième commutateur commandé électriquement (S3) comprenant :
- une première borne couplée à la borne de commande du premier commutateur commandé électriquement (S1) ;
- une seconde borne couplée au noeud de sortie via une seconde résistance (R3) ; et
- une borne de commande couplée à la seconde borne du second commutateur commandé électriquement (S2) et couplée au noeud de sortie via une troisième résistance (R2).

8. Circuit selon la revendication 7, dans lequel le troisième commutateur commandé électriquement (S3) est un transistor PNP.

9. Circuit selon la revendication 8, dans lequel la première borne du troisième commutateur commandé électriquement (S3) est un émetteur du transistor PNP, la seconde borne du troisième commutateur commandé électriquement (S3) est un collecteur du transistor PNP, et la borne de commande du troisième commutateur commandé électriquement (S3) est une base du transistor PNP.

10. Circuit selon l'une quelconque des revendications 1 à 9, dans lequel le premier commutateur commandé électriquement (S1) est un MOSFET de puissance.

11. Circuit selon la revendication 10, dans lequel la première borne du premier commutateur commandé électriquement (S1) est le drain du MOSFET de puissance et la seconde borne du premier commutateur commandé électriquement (S1) est la source du MOSFET de puissance.

12. Circuit selon l'une quelconque des revendications 1 à 11, comprenant en outre une troisième diode (D3) [de l'alimentation électrique], laquelle diode (D3) comprend une cathode couplée au noeud de sortie (Vₒᵤₜ) et une anode couplée à un potentiel de mise à la terre, et un inducteur (L1) comprenant une première borne couplée au noeud de sortie (Vₒᵤₜ) et une seconde borne venant se connecter à une charge (R4).

13. Circuit selon l'une quelconque des revendications 1 à 11, comprenant en outre un quatrième commutateur commandé électriquement (S4) comprenant :
- une première borne couplée au noeud de sortie (Vₒᵤₜ) ;
- une seconde borne couplée à un potentiel de mise à la terre ; et
- une borne de commande couplée à un troisième noeud d'entrée venant se connecter à une seconde entrée de commande (V_{A}) conçue pour fournir un potentiel de commande qui est inférieur au premier potentiel.

14. Circuit selon la revendication 13, dans lequel le quatrième commutateur commandé électriquement (S4) est un second MOSFET de puissance.

15. Circuit selon la revendication 14, dans lequel la première borne du quatrième commutateur commandé électriquement (S4) est le drain du second MOSFET de puissance, et la seconde borne du quatrième commutateur commandé électriquement (S4) est une source du second MOSFET de puissance.

16. Utilisation d'un circuit (1) selon l'une quelconque des revendications précédentes pour actionner un circuit de conversion de puissance.
